# EUROPÄISCHE PATENTSCHRIFT

(11) **EP 3 885 242 B1**
(45) Veröffentlichungstag und Bekanntmachung des Hinweises auf die Patenterteilung: **28.01.2026**
(21) Anmeldenummer: 21020157.0
(22) Anmeldetag: 18.03.2021
(51) Int. Cl.: B62M 9/16, B62M 9/126

(54) **SCHALTWERKSROLLE MIT TRAGSTRUKTUR UND ÜBERLASTSCHUTZ**
SWITCHGEAR ROLLER WITH SUPPORTING STRUCTURE AND OVERLOAD PROTECTION
POULIE DE DÉRAILLEUR POURVU DE STRUCTURE PORTEUSE ET PROTECTION CONTRE LES SURCHARGES

(30) Priorität: 23.03.2020 DE 102020001877
(43) Veröffentlichungstag der Anmeldung: 29.09.2021
(73) Patentinhaber: SRAM Deutschland GmbH, 97424 Schweinfurt (DE)
(72) Erfinder: Braedt, Henrik, 97456 Dittelbrunn-OT Hambach (DE)

(56) Entgegenhaltungen:
- CN-Y- 201 305 106
- DE-A1- 102017 220 921
- US-A- 4 433 963
- US-A1- 2017 259 881

## Beschreibung

Die vorliegende Erfindung betrifft eine Kettenrolle für ein Fahrrad-Schaltwerk nach dem Oberbegriff von Patentanspruch 1. US4433963 offenbart die Merkmale des Oberbegriffes des Anspruchs 1.

Gattungsgemäße Kettenrollen, nachfolgend auch als Schaltwerksrollen bezeichnet, werden in hinteren Fahrrad-Schaltwerken von Fahrrad-Kettenschaltungen eingesetzt und sind dort funktionaler Bestandteil der Kettenkäfiganordnung, vereinfacht auch als Schaltwerkskäfig oder Kettenkäfig bezeichnet. Die Kettenkäfiganordnung eines hinteren Fahrrad-Schaltwerks enthält eine obere Kettenrolle sowie eine untere Kettenrolle, welche üblicherweise zwischen zwei Leitblechen des Kettenkäfigs angeordnet sind.

Dabei übernimmt die obere Kettenrolle die Aufgabe der Führung des auf die Ritzelkassette auflaufenden Leertrums der Kette, insbesondere zur exakten Kontrolle des Gangwechsels zwischen den verschiedenen Ritzeln der Ritzelkassette. Die untere Kettenrolle übernimmt die Aufgabe, die überschüssige Kettenlänge aufzunehmen, sowie die Aufgabe der unter allen Betriebsbedingungen möglichst sicheren Einleitung des Leertrums der Kette in das Schaltwerk.

Die Erfindung kann sowohl für die obere als auch für die untere Kettenrolle eingesetzt werden.

### Stand der Technik

Herkömmliche Schaltwerksrollen werden meist aus Kunststoff im Spritzgussverfahren hergestellt und enthalten üblicherweise Kugellager zur reibungsarm drehbaren Befestigung im Kettenkäfig. Das Spritzgussverfahren erlaubt eine kostengünstige Herstellung der Schaltwerksrollen, wobei auf diese Weise auch komplexe Geometrien an der Schaltwerksrolle ausgeformt werden können.

Meist wird das Kugellager bereits bei dieser Urformung der Kettenrolle umspritzt und somit in die Kettenrolle eingeformt, was Kosten für die Erzeugung einer Lagerpassung und für die Lagermontage einspart. Schaltwerksrollen aus Kunststoff zeichnen sich auch durch eine hohe Laufruhe aus. Hierfür sind die Dämpfungseigenschaften des Rollenmaterials beim radialen Aufschlagen der Kettenglieder auf die Rolle im Betrieb ausschlaggebend.

Nachteilig bei Kettenrollen dieser Bauart sind die geringe Steifigkeit und die herstellungsbedingten Toleranzen durch Schrumpfungsprozesse. Diese Nachteile kommen insbesondere bei Kettenrollen mit großem Durchmesser zum Tragen.

Ein weiterer Nachteil von herkömmlichen Kettenrollen aus Kunststoff resultiert aus der weitgehend massiven und oft zerklüfteten, jedoch kaum Aussparungen aufweisenden Tragstruktur zwischen dem Lagerbereich und dem Zahnbereich der Kettenrolle. Diese Tragstruktur konventioneller Kettenrollen ergibt sich konstruktiv aus den Materialeigenschaften in Abhängigkeit vom gegebenen Bauraum und den strukturellen Anforderungen.

Es hat sich gezeigt, dass sich insbesondere bei widrigen Witterungsbedingungen Sedimente und Verunreinigungen im Bereich solcher Tragstrukturen herkömmlicher Kettenrollen anreichern. Daraus resultiert erhöhter Verschleiß, eine Verringerung des Antriebswirkungsgrads durch Reibung, und die Gefahr eines vollständigen Blockierens der Schaltrolle durch Verklemmen von Fremdkörpern zwischen Schaltwerksrolle und Kettenkäfig.

Zusammengefasst ergeben sich für Kunststoffschaltrollen im Spritzgussverfahren folgende Nachteile:
1. Geringe Seitensteifigkeit
2. Geringe Präzision bezüglich Teilkreisdurchmesser und Seitenschlag
3. Geringe Selbstreinigungsfunktion bei starker Verschmutzung
4. Nachteile 1-3 erhöhen sich mit dem Durchmesser der Schaltrolle

Vorteile derartiger Kettenrollen sind:
1. Geringe Kosten
2. Gestaltungsfreiheit bei der Erzeugung komplexer Zahnformen
3. Geringe Geräuschemissionen

Alternativ werden Schaltwerksrollen spanend hergestellt, wobei meist Aluminiumlegierungen zum Einsatz kommen. Das im Vergleich zu Kunststoff deutlich höhere E-Modul derartiger Aluminiumlegierungen führt zu einer verbesserten Seitensteifigkeit auch bei großen Kettenrollen mit speichenartiger Tragstruktur. Derartige größere Kettenrollen erfreuen sich nicht nur aus Gründen der Laufruhe und geringen Reibung, sondern auch aus optischen Gründen zunehmender Beliebtheit.

Die für den Ketteneingriff wichtigen Teilkreis- und Seitenschlagstoleranzen können spanend auch bei relativ großen Kettenrollen sehr genau gefertigt werden. Die Präzision derart gefertigter Kettenrollen hilft insbesondere im komplexen Zusammenspiel von Kettenrolle, Kette und Schaltwerkskäfig, um fehlerfreien Betrieb des Schaltwerks in den unterschiedlichsten Fahrsituationen zu gewährleisten.

Nachteilig bei Kettenrollen dieser Bauart sind die hohen Kosten, die fertigungsbedingten Limitationen bei der Umsetzung komplexer Zahnformen, und die im Vergleich mit Kunststoff-Kettenrollen erhöhte Geräuschentwicklung durch Interaktion mit der Kette im Fahrbetrieb.

Ein besonders schwerwiegender Nachteil ergibt sich bei Kettenrollen mit den eigentlich wünschenswerten, großen Materialaussparungen in der Speichen-Tragstruktur. Wie weiter oben ausgeführt, können große Materialaussparungen zwar zur Selbstreinigung beitragen, und lassen sich auch einfach säubern. Es hat sich jedoch gezeigt, dass mit der Größe der Aussparung auch die Wahrscheinlichkeit zunimmt, dass größere Fremdkörper entsprechender Länge und Stärke (insbesondere kleinere Äste) in die Aussparungen eindringen und die Kettenrolle blockieren. Wird das Pedalieren in einer derartigen Situation nicht sofort eingestellt, kann es dadurch zum Schaltwerksabriss mit weiteren Folgeschäden für Antriebsstrang und Rahmen kommen.

Zusammengefasst sind die primären Nachteile von gefrästen Schaltwerksrollen aus Metall:
1. hohe Kosten
2. eingeschränkte Gestaltungsmöglichkeiten, insbesondere bei komplexen Zahngeometrien
3. Geräuschentwicklung
4. Blockierungsgefahr durch Fremdkörper

Vorteile derartiger Schaltwerksrollen aus Metall sind:
1. hohe Seitensteifigkeit
2. Präzision
3. gute Selbstreinigungsfähigkeit bei offen gestalteter Tragstruktur
4. technische und optische Gestaltungsfreiheit

Ausgehend von dem vorstehend beschriebenen Stand der Technik ist es somit die Aufgabe der vorliegenden Erfindung, eine Kettenrolle für ein Fahrrad-Schaltwerk bereitzustellen, mit der die vorgenannten Nachteile überwunden werden. Dabei sollen insbesondere die Vorteile beider aufgeführter Bauarten erhalten bleiben, also sowohl die Vorteile von Schaltwerksrollen aus Kunststoff als auch aus Metall.

Diese Aufgabe wird durch eine Kettenrolle mit den Merkmalen des Patentanspruchs 1 gelöst. Bevorzugte Ausführungsformen sind Gegenstand der Unteransprüche.

Die Kettenrolle besitzt gattungsgemäß zunächst ein Rotationslager, einen Zahnring mit daran ausgebildeten Zähnen sowie eine Tragstruktur, welche den Außenring des Rotationslagers und den Zahnring miteinander verbindet. Die Tragstruktur wird im Folgenden figurativ auch als "Skelett" bezeichnet. Je nach Einsatzbereich und Preiskategorie können für das Rotationslager entweder Kugellager oder Gleitlager zum Einsatz kommen.

Die Kettenrolle zeichnet sich dadurch aus, dass Zahnring und Tragstruktur aus unterschiedlichen Werkstoffen bestehen, die Tragstruktur vorzugsweise aus Metall und der Zahnring vorzugsweise aus Kunststoff, wobei Zahnring und Tragstruktur radial sowie axial formschlüssig miteinander verbunden sind.

Auf diese Weise lässt sich der Zahnring, vorzugsweise mittels Spritzguss, unabhängig von der Tragstruktur der Kettenrolle mit hoher Gestaltungsfreiheit und Genauigkeit fertigen und sorgt damit für optimalen sowie schalldämpfenden Eingriff mit der Kette, während die vorzugsweise aus Metall bestehende Tragstruktur der Kettenrolle eine hohe Rundlaufpräzision, Seitensteifigkeit und Selbstreinigungsfähigkeit verleiht sowie ebenfalls eine hohe Gestaltungsfreiheit ermöglicht.

Dabei ist die Verbindung zwischen Tragstruktur und Zahnring in radialer sowie in axialer Richtung formschlüssig fest, in Umfangsrichtung jedoch vorzugsweise frei bzw. rotatorisch reibschlüssig beweglich ausgebildet.

Wird somit die Tragstruktur bzw. das Skelett der Kettenrolle beispielsweise durch einen Fremdkörper gegenüber dem Schaltwerkskäfig blockiert, kann sich der über die Kette angetriebene Zahnring mit entsprechendem Reibmoment gegenüber der Tragstruktur weiterdrehen. Auf diese Weise erhält die Kettenrolle somit einen eingebauten Überlastschutz, und es können die weiter oben beschriebenen Schäden am Schaltwerk bzw. am Antriebsstrang und sogar am Fahrradrahmen wirksam vermieden werden.

Bevorzugt ist die Verbindung zwischen Tragstruktur und Zahnring der Kettenrolle als Überspritzung ausgebildet. Hierzu kann die Tragstruktur in die Kavität des Spritzgusswerkzeugs für den Zahnring eingelegt und dann mit einem Polymer um- bzw. überspitzt werden, wodurch zunächst einmal der Zahnring entsteht. Dabei erreicht der Zahnring aus Kunststoff dank der Herstellung durch Umspritzen des Kettenrollen-Skeletts auch eine hohe Präzision und Rundlaufgenauigkeit, da die starre Tragstruktur des Skeletts die schrumpfungsbedingten Toleranzen bzw. Formänderungen des Zahnrings erheblich reduziert.

Vorzugsweise ist die Kettenrolle mit einem Kugellager ausgestattet, welches bevorzugt ebenfalls durch Umspritzen mit der Tragstruktur verbunden wird. Die Verbindung zwischen dem Lager und der Tragstruktur erfolgt dabei durch einen einstückig um einen Außenring des Lagers umspritzten Lagerkäfig aus Polymer, welcher sowohl den Außenring des Lagers als auch eine Innenausnehmung der Tragstruktur formschlüssig einschließt, und auf diese Weise Außenring und Tragstruktur fest miteinander verbindet.

Die Verbindung zwischen Lager und Tragstruktur mittels eines dergestalt umspritzten Lagerkäfigs führt zu minimalen Toleranzen, gutem Rundlauf und hoher Belastbarkeit der Kettenrolle. Diese Ausführungsform lässt sich außer mit einem Kugellager auch mit einem Gleitlager darstellen.

Die Tragstruktur ist dabei vorzugsweise als Stanzteil aus Metallblech, besonders bevorzugt aus einer Aluminium-Hartlegierung ausgebildet. Auf diese Weise lassen sich insbesondere auch Kettenrollen mit großem Durchmesser realisieren, die geringes Gewicht und guten Rundlauf mit geringer Geräuschentwicklung und ansprechendem Erscheinungsbild verbinden.

Nachfolgend werden Ausführungsformen der Erfindung anhand der Figuren beispielhaft beschrieben.

Es zeigen:
- Fig. 1:: ein hinteres Fahrrad-Schaltwerk gemäß dem Stand der Technik;
- Fig. 2:: eine Kettenrolle nach dem Stand der Technik aus dem Fahrradschaltwerk gemäß Fig. 1;
- Fig. 3:: eine Kettenrolle nach einem Ausführungsbeispiel der Erfindung;
- Fig. 4:: die Kettenrolle gemäß Fig. 2 in einer Explosionsdarstellung;
- Fig. 5 und 6:: die Kettenrolle gemäß Fig. 3 und 4 in zwei Ansichten; und
- Fig. 7 und 8:: die Kettenrolle gemäß Fig. 3 bis 6 in zwei Schnittdarstellungen.

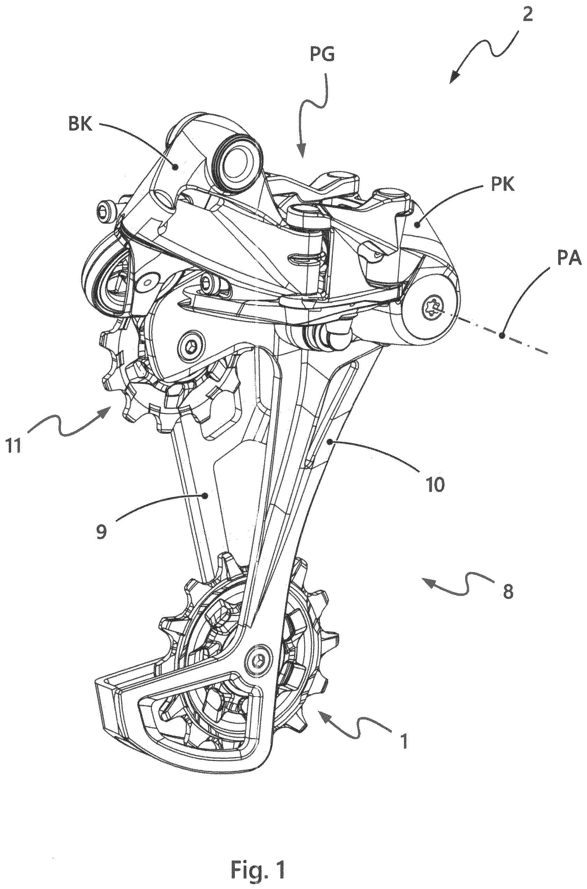

Fig. 1 zeigt ein für sich genommen bekanntes hinteres Schaltwerk 2 eines Fahrrads mit Kettenschaltung. Man erkennt den üblichen Aufbau des Schaltwerks 2 mit dem am Rahmen-Hinterbau des Fahrrads befestigbaren B-Knuckle BK, welches über das Schaltwerksparallelogramm PG mit der zum Zweck des Gangwechsels seitwärts schwenkbaren P-Knuckle PK verbunden ist.

Weiterhin weist das Schaltwerk 2 in ebenfalls bekannter Weise eine Kettenkäfiganordnung 8 auf. Die Kettenkäfiganordnung 8 umfasst ein inneres Leitblech 9 und ein äußeres Leitblech 10, eine obere Kettenrolle 11 und eine untere Kettenrolle 1.

Die Kettenkäfiganordnung 8 ist relativ zum P-Knuckle PK um die Achse PA des P-Knuckles PK schwenkbar sowie durch eine im P-Knuckle PK in bekannter Weise enthaltene Spannfeder im Uhrzeigersinn federbelastet, wodurch die zum Betrieb des Fahrrad-Antriebsstrangs erforderliche Spannung in der Kette erzeugt wird.

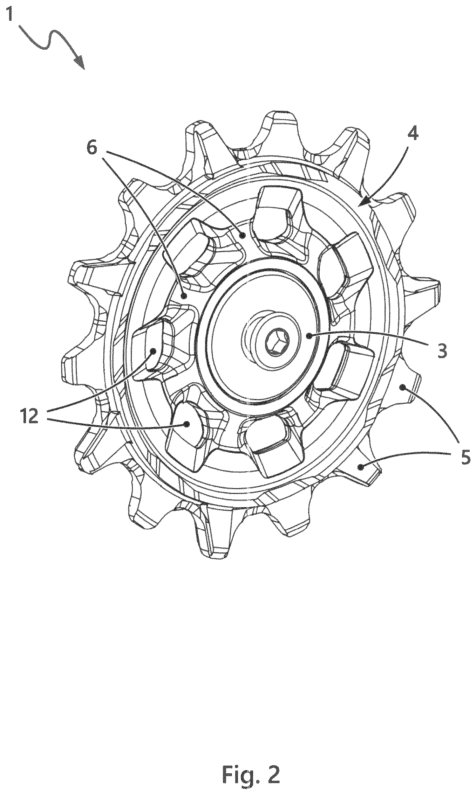

Fig. 2 zeigt eine untere Kettenrolle 1 des Schaltwerks 2 aus Fig. 1, wobei die nachfolgenden Ausführungen zum Stand der Technik und zur Erfindung sinngemäß auch für eine obere Kettenrolle 11 des Schaltwerks 2 aus Fig. 1 gelten.

Man erkennt eine radial innen angeordnete Lagerung 3, einen radial außen angeordneten Zahnring 4 mit daran ausgebildeten Zähnen 5 sowie eine Tragstruktur 6, welche das Lager, bzw. einen Lager-Außenring, mit dem Zahnring 4 verbindet. Bei dieser aus dem Stand der Technik bekannten Kettenrolle sind Zahnring 4 samt Zähnen 5 und die Tragstruktur 6 einstückig als Spritzgussteil ausgebildet.

Die Nachteile dieser einstückigen Ausbildung, besonders bei Kettenrollen mit größerem Durchmesser, sind weiter oben bei der Beschreibung des Standes der Technik ausgeführt. Darunter fallen insbesondere geringe Seitensteifigkeit und Rundlaufpräzision sowie eine nicht optimale Selbstreinigung aufgrund werkstoff- und fertigungsbedingt relativ kleiner und gleichzeitig tiefer und oft zerklüfteter Aussparungen 12 im Bereich der Tragstruktur 6.

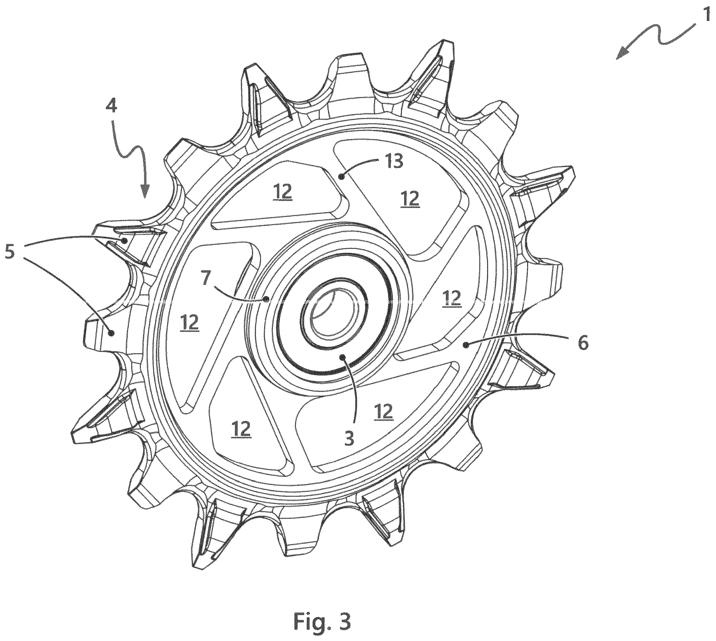

Fig. 3 zeigt ein Ausführungsbeispiel für eine Kettenrolle 1 gemäß der Erfindung. Die Kettenrolle 1 umfasst eine hier als Kugellager 3 ausgebildete Lagerung, einen Zahnring 4 mit daran einstückig ausgebildeten Zähnen 5, sowie eine das Kugellager 3 und den Zahnring 4 verbindende Tragstruktur 6. Die Tragstruktur 6 weist beim dargestellten Ausführungsbeispiel Aussparungen 12 sowie Speichen 13 auf.

In der Schrägansicht gemäß Fig. 3 lassen sich auch die komplexen Geometrien im Bereich des Zahnrings 4 mit den am Zahnring 4 ausgebildeten Zähnen 5 gut erkennen. Diese Geometrien umfassen insbesondere spezifische Zahnformen mit unterschiedlicher Breite zur dezidierten Aufnahme von Ketteninnenlaschen bzw. Kettenaußenlaschen, sowie weitere Geometrieelemente zur Kettenführung und Selbstreinigung.

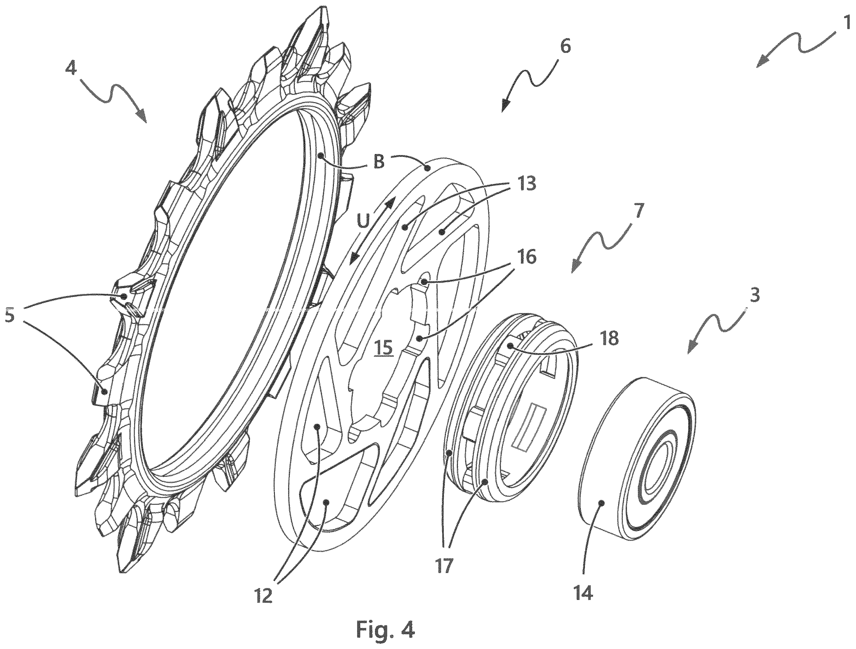

Fig. 4 zeigt die Kettenrolle 1 gemäß Fig. 3 in einer Explosionsdarstellung. Man erkennt den Zahnring 4 mit den daran einstückig ausgebildeten Zähnen 5, die Tragstruktur bzw. das Skelett 6 und das Kugellager 3. Der kreisförmige Außenbereich des Skeletts 6 bildet zusammen mit einer hierzu formschlüssigen Nut am Innenumfang des Zahnrings 4 Reibflächen bei B aus, die als rotatorische Rutschkupplung zwischen dem Zahnring 4 und dem Skelett 6 fungieren.

Wird somit das Skelett 6 während der Fahrt blockiert, beispielsweise durch Fremdkörper, so kann der Zahnring 4 beim Weiterpedalieren weiter um das dann stillstehende Skelett 6 rotieren, was die eingangs beschriebenen schweren Schäden an Antriebsstrang bzw. Fahrradrahmen durch den andernfalls drohenden Schaltwerksabriss vermeidet. Dieser Vorteil kommt insbesondere auch bei Fahrrädern mit elektrischem Zusatzantrieb zum Tragen, bei denen tendenziell noch höhere Antriebsleistungen bzw. Antriebsmomente wirken, und bei denen der elektrische Zusatzantrieb ggf. nicht schnell genug abschaltet, wenn eine Blockade im Antriebsstrang erkannt wird.

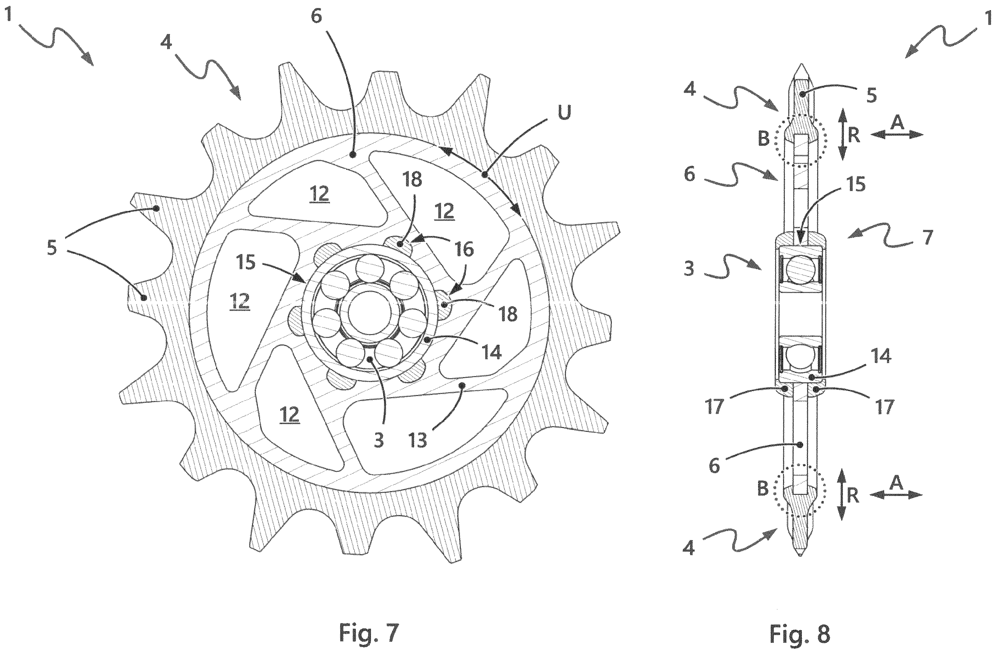

In Fig. 4 weiterhin dargestellt ist ein Lagerkäfig 7, welcher hier als einstückige Umspritzung ausgebildet ist. Wie insbesondere eine Zusammenschau mit Fig. 8 zeigt, schließt der Lagerkäfig 7 sowohl den Außenring 14 des Kugellagers 3 als auch eine Innenausnehmung 15 des Skeletts 6 formschlüssig ein und fixiert das Kugellager somit zumindest axial fest gegenüber dem Skelett 6.

Die zur Aufnahme des Kugellagers 3 dienende Innenausnehmung bzw. Lagerpassung 15 des Skeletts 6 weist an ihrem Außenumfang zusätzliche Ausnehmungen 16 auf, welche der durch gemeinsame Umspritzung von Lager 3 und Skelett 6 gebildete Lagerkäfig 7 formschlüssig durchdringt. Die Ausnehmungen 16 füllen sich beim Umspritzen des Lagers 3 mit Kunststoff und bilden auf diese Weise die Verbindungsstege 18 des Lagerkäfigs 7. Der Lagerkäfig 7 umfasst zwei Käfighälften 17, die über die Verbindungsstege 18 einstückig miteinander verbunden sind.

Das Skelett 6 ist in der dargestellten Ausführungsform als einfaches Stanzteil aus einer hochwertigen Aluminium-Hartlegierung ausgeführt. Auf diese Weise können sehr gute Fertigungstoleranzen bei geringen Herstellungskosten realisiert werden. Gleichzeitig ergibt sich eine hohe Gestaltungsfreiheit bezüglich der Speichen 13 und Aussparungen 12 des Skeletts 6. Aufgrund der großen und prismenförmig durchgehend ausgebildeten Aussparungen 12 des Skeletts 6 ergibt sich zudem eine gute Selbstreinigung der Kettenrolle 1. Die komplexen Freiformflächen der Zähne 5 des Zahnrings 4 lassen sich dabei unabhängig von der Gestaltung des Skeletts 6 mit hoher Genauigkeit im Spritzgussverfahren aus Kunststoff fertigen.

Bei der Urformung des Zahnrings 4 wird das Skelett 6 in die Kavität der Spritzgussform eingelegt und vom Material des Zahnrings 4 umspritzt. Der radiale und axiale Formschluss (vgl. Fig. 8 bei B) zwischen Skelett 6 und Zahnring 4 lässt sich damit kostengünstig und passgenau herstellen. Auch die rotatorische Reibverbindung bei B zwischen Skelett 6 und Zahnring 4 in Umfangsrichtung U (vgl. Fig. 7 und 8) ist dank dieses Prozesses nicht abhängig von den Toleranzen dieser beiden Bauteile, sondern kann durch die Prozessparameter beim Überspritzen optimal eingestellt werden. Durch die Schrumpfung des Zahnrings 4 beim Abkühlen nach dem Spritzguss wird der nötige Anpressdruck bei B zwischen Zahnring 4 und Skelett 6 bereitgestellt, um die gewünschte Funktion dieser Verbindung als Überlast- bzw. Rutschkupplung zu gewährleisten.

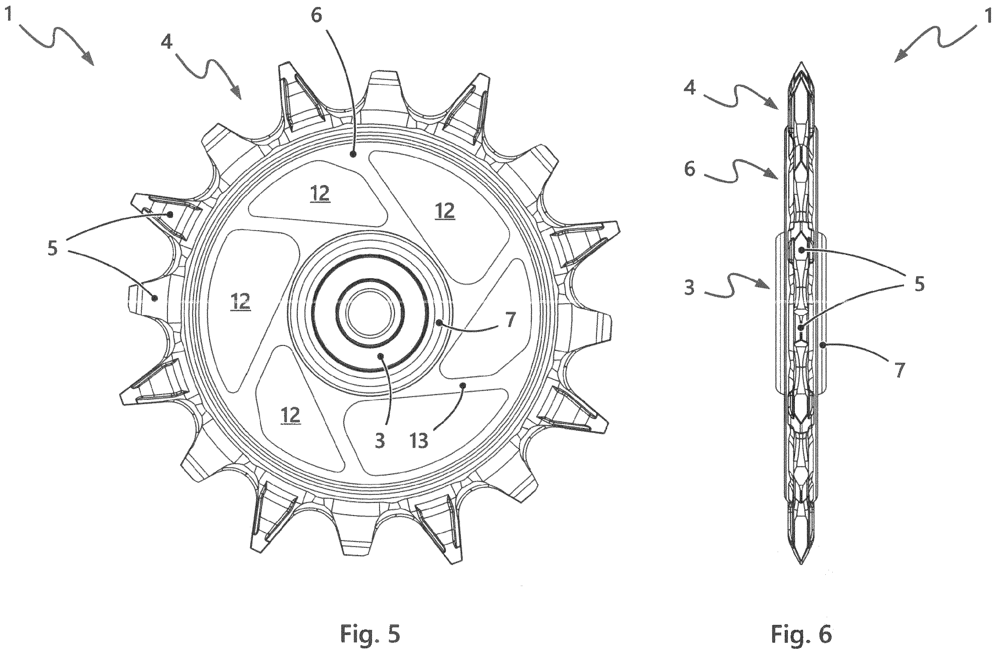

Fig. 5 und 6 zeigen die Kettenrolle 1 gemäß Fig. 3 und 4 in Seitenansicht und in rückwärtiger Ansicht, bezogen auf den montierten Zustand an einem Schaltwerk 2 gemäß Fig. 1, bzw. an einem Fahrrad. Man erkennt den Zahnring 4 mit den daran einstückig ausgebildeten Zähnen 5, die Tragstruktur bzw. das Skelett 6 mit Aussparungen 12 und Speichen 13, das Kugellager 3 sowie den das Kugellager 3 und das Skelett 6 verbindenden Lagerkäfig 7.

Fig. 7 und 8 entsprechen den Ansichten gemäß Fig. 5 und 6, hier jedoch als Schnittdarstellungen. Es wird insbesondere die Verbindung zwischen Skelett 6 und Zahnring 4 bei B deutlich. Man erkennt, dass Skelett 6 und Zahnring 4 aufgrund des nutförmigen Eingriffs des Skeletts 6 am Innenumfang des Zahnrings 4 bei B (vgl. auch Fig. 4) in radialer Richtung R sowie in axialer Richtung A formschlüssig fest miteinander verbunden sind, wobei in Umfangsrichtung U gleichzeitig eine rotatorisch freie, aufgrund der Schrumpfung des Zahnrings 4 nach dem Umspritzen jedoch reibungsbehaftete Verbindung zwischen Skelett 6 und Zahnring 4 vorliegt.

In Fig. 7 ebenfalls zu erkennen sind die Ausnehmungen 16 im Bereich der Lagerpassung 15 des Skeletts 6, die von den Stegen 18 des Lagerkäfigs 7 ausgefüllt und durchdrungen werden, vgl. auch Fig. 4.

Der Lagerkäfig 7 umfasst die beiden Käfighälften 17 und die Stege 18, wird durch eine gemeinsame Umspritzung des Lagers 3 und des Skeletts 6 gebildet (vgl. Fig. 3 und 4 sowie die zugehörige Beschreibung), schließt hierdurch sowohl den Außenring 14 des Lagers 3 als auch den Innenumfang des Skeletts 6 im Bereich dessen Lagerpassung 15 formschlüssig ein, und sorgt so für eine feste Verbindung zwischen Skelett 6 und Lager 3.

Vorzugsweise werden Lagerkäfig 7 und Zahnring 4 gleichzeitig in einem einzigen, gemeinsamen Werkzeug durch gleichzeitige Umspritzung von Lager 3 und Skelett 6 erzeugt, so dass sich unabhängig von Bauteiltoleranzen insbesondere des Skeletts 6 ein optimaler Rundlauf der gesamten Kettenrolle 1 ergibt.

## Patentansprüche

1. Kettenrolle (1) für ein hinteres Fahrrad-Schaltwerk (2), die Kettenrolle (1) umfassend ein Rotationslager (3), einen Zahnring (4) mit daran ausgebildeten Zähnen (5) sowie eine Rotationslager (3) und Zahnring (4) verbindende Tragstruktur (6),
wobei Zahnring (4) und Tragstruktur (6) aus unterschiedlichen Werkstoffen ausgebildet und radial (R) sowie axial (A) formschlüssig miteinander verbunden sind,
**dadurch gekennzeichnet,**
**dass** Zahnring (4) und Tragstruktur (6) in Umfangsrichtung (U) rotatorisch frei unter Reibschluss miteinander verbunden sind und diese Verbindung als Überlastschutz funktioniert.

2. Kettenrolle (1) nach Anspruch 1,
**dadurch gekennzeichnet,**
**dass** die Verbindung zwischen Zahnring (4) und Tragstruktur (6) als Umspritzung (B) ausgebildet ist.

3. Kettenrolle (1) nach Anspruch 1 oder 2,
**dadurch gekennzeichnet,**
**dass** eine Verbindung zwischen Rotationslager (3) und Tragstruktur (6) durch einen um Rotationslager (3) und Tragstruktur (6) einstückig (14) umspritzten, einen Außenring (14) des Rotationslagers (3) sowie eine Innenausnehmung (15) der Tragstruktur (6) formschlüssig einschließenden Lagerkäfig (7) gebildet ist.

4. Kettenrolle (1) nach einem der Ansprüche 1 bis 3,
**dadurch gekennzeichnet,**
**dass** die Tragstruktur (6) als Stanzteil aus Metallblech, vorzugsweise aus Hartaluminium, ausgebildet ist.

## Claims

1. Chain roller (1) for a rear bicycle gearshift mechanism (2), the chain roller (1) comprising a rotary bearing (3), a toothed ring (4) with teeth (5) formed thereon, and a support structure (6) which connects rotary bearing (3) and toothed ring (4),
wherein toothed ring (4) and support structure (6) are formed from different materials and are connected to one another radially (R) and axially (A) in positively locking fashion,
**characterized**
**in that** toothed ring (4) and support structure (6) are connected to one another freely rotationally in a circumferential direction (U) by frictional locking and this connection functions as an overload safeguard.

2. Chain roller (1) according to Claim 1,
**characterized**
**in that** the connection between toothed ring (4) and support structure (6) is formed as an overmoulding (B).

3. Chain roller (1) according to Claim 1 or 2,
**characterized**
**in that** a connection between rotary bearing (3) and support structure (6) is formed by a bearing cage (7) which is overmoulded integrally (14) around rotary bearing (3) and support structure (6) and which encompasses an outer ring (14) of the rotary bearing (3) and an inner recess (15) of the support structure (6) in positively locking fashion.

4. Chain roller (1) according to any of Claims 1 to 3, **characterized**
**in that** the support structure (6) is formed as a punched part composed of sheet metal, preferably composed of hard aluminium.

## Revendications

1. Galet de chaîne (1) pour un dérailleur arrière de bicyclette (2), le galet de chaîne (1) comprenant un palier rotatif (3), une couronne dentée (4) avec des dents (5) réalisées sur celle-ci, ainsi qu'une structure porteuse (6) reliant le palier rotatif (3) et la couronne dentée (4),
la couronne dentée (4) et la structure porteuse (6) étant réalisées dans des matériaux différents et reliées entre elles radialement (R) et axialement (A) par complémentarité de forme,
**caractérisé**
**en ce que** la couronne dentée (4) et la structure porteuse (6) sont reliées entre elles de manière libre en rotation dans la direction circonférentielle (U) par friction et cette liaison sert de protection contre les surcharges.

2. Galet de chaîne (1) selon la revendication 1,
**caractérisé**
**en ce que** la liaison entre la couronne dentée (4) et la structure porteuse (6) est réalisée sous forme de surmoulage (B).

3. Galet de chaîne (1) selon la revendication 1 ou 2, **caractérisé**
**en ce qu'**une liaison entre le palier rotatif (3) et la structure porteuse (6) est formée par une cage de palier (7) surmoulée d'un seul tenant (14) autour du palier rotatif (3) et de la structure porteuse (6), entourant par complémentarité de forme une bague extérieure (14) du palier rotatif (3) ainsi qu'un évidement intérieur (15) de la structure porteuse (6).

4. Galet de chaîne (1) selon l'une des revendications 1 à 3,
**caractérisé**
**en ce que** la structure porteuse (6) est réalisée sous forme de pièce découpée en tôle métallique, de préférence en aluminium dur.
